# EUROPEAN PATENT SPECIFICATION

(11) **EP 3 148 733 B1**
(45) Date of publication and mention of the grant of the patent: **01.11.2023**
(21) Application number: 15726120.7
(22) Date of filing: 28.05.2015
(51) Int. Cl.: B22F 3/15, B22F 7/06, B22D 25/02, B22F 5/00, B22F 7/08, F04D 29/02, F04D 29/28

(54) **METHOD OF MANUFACTURING A COMPONENT OF A TURBOMACHINE**
VERFAHREN ZUR HERSTELLUNG EINES BAUTEILS EINER STRÖMUNGSMASCHINE
PROCÉDÉ DE FABRICATION D'UN ÉLÉMENT D'UNE TURBOMACHINE

(30) Priority: 30.05.2014 IT CO20140017
(43) Date of publication of application: 05.04.2017
(73) Proprietor: Nuovo Pignone Tecnologie - S.r.l., 50127 Florence (IT)
(72) Inventor: MASI, Gabriele, 50127 Florence (IT); BELLACCI, Michelangelo, 50127 Florence (IT); CAPPUCCINI, Filippo, 50127 Florence (IT); IOZZELLI, Federico, 50127 Florence (IT)
(74) Representative: Novagraaf Group
(86) International application number: PCT/EP2015/061903
(87) International publication number: WO 2015/181328

(56) References cited:
- EP-A1- 2 388 091
- EP-A2- 0 629 770
- WO-A1-00/13823
- WO-A1-2004/030850
- WO-A1-2011/121186
- US-A1- 2007 020 134

## Description

### TECHNICAL FIELD

Embodiments of the subject matter disclosed herein relate to methods of manufacturing a component of a turbomachine, components of turbomachines and turbomachines.

### BACKGROUND ART

EP 0 629 770 A2 discloses a ring capsule in which fibre reinforced rings are arranged. The ring capsule is filled with metal powder.

One of the technology used for manufacturing components of turbomachines is powder metallurgy hot isostatic pressing, in short P/M-HIP; this technology is used for example for manufacturing closed impellers of centrifugal compressors made of metal material.

One of the reasons why this technology is attractive is that, through a particular approach, it allows to manufacture metal parts that do not need further machining or need limited amount of machining of the whole part or at least of some surfaces of the part; in this case, the technology is referred to as "Net-Shape HIP"; although this approach may be applied both to external surfaces and internal surfaces of a part, it is particularly useful when applied to the internal surfaces as machining of these surfaces is difficult or, sometimes, even impossible.

The cost and the time of machining depend on the type of material to be machined, the quantity of material to be removed, the accessibility of the material to be removed, and the machining technology used; for example, milling is relatively quick but a milling tool is (relatively) quite small while Electric Discharge Machining is slower but an EDM tool is (relatively) quite bigger.

In order to obtain a finished or almost-finished part, i.e. with "net shape surfaces", it is necessary to simulate accurately the behavior of the (metal) container, the (metal) powder and the HIP equipment used for manufacturing the part.

Furthermore, even if accurate simulations are carried out, some real manufacturing trials (typically one or two or three) are necessary in order to meet the required design dimensional tolerances of complex part; after each trial, the obtained part is checked and measured and some changes are made to the container and/or to the HIP process parameters (for example the pressure curve and/or the temperature curve).

Therefore, the "net shape surfaces" approach is generally applied only to few specific surfaces and not to all surfaces of a part to be manufactured.

Simulations and trials impact on the time and the cost necessary for starting the production of a new part and, therefore, are a problem especially for single-part production or small-series production. In the field of oil & gas, there are some parts of some turbomachines that are "single parts"; in other words, such part of a turbomachine is different from any part of any turbomachine that was manufactured in the past and from any part of any turbomachine that will be manufactured in the future, even if such part may be quite similar to the past parts and to the future parts.

### SUMMARY

The present invention is defined in the accompanying claims.

According to the P/M-HIP technology, a container is used for defining the outside surfaces of the component to be manufactured and the container is filled with metal powder, evacuated of the gas present inside and sealed, and then the powder is consolidated by a Hot Isostatic Pressure thermal cycle; usually, the manufacturing process ends with the removal of the container; the "outside surfaces" of a body are those surfaces that delimit the body externally and therefore do not include the surfaces of through holes and of internal cavities.

The Applicant has used P/M-HIP also for manufacturing parts having one or more internal channels, including internal channels with tight tolerances such as for example working fluid flow paths; for this purpose, one or more cores have been used, in addition to the container, in order to define inside surfaces of the component, i.e. the surfaces defining the channels.

During a P/M-HIP process, when heat and pressure is applied, not only the metal powder, but also the container and the cores, if any, deform. This leads, for example, to a change in the shape, size and position of any internal channel of the manufactured part.

The higher the deformations the more manufacturing trials are necessary, as high deformations are difficult to be predicted exactly through simulation.

The Applicant has thought that if deformations should be sufficiently low, simulations would be necessary but real manufacturing trials would not be necessary; in this way, the time and the cost for starting the production of a new part through P/M-HIP would be reduced considerably.

The Applicant has considered that the highest deformations are caused by those regions of the container where there is a lot of mass of metal powder that is subject to the highest shrinkage; anyway, in general, deformations can not be reduced by simply changing the shape and size of the container or the shapes and sizes of its regions because these shapes and sizes are strongly related to the shapes and sizes of the part to be manufactured.

The Applicant has conceived to locate at least one metal insert inside the container before filling the container with metal powder; the metal insert is to be located in a region of the container having a big or the biggest volume, i.e. where a lot of mass of metal powder (that is subject to a high or the highest shrinkage) would locate according to a traditional P/M-HIP process; in general, more than one insert may be used.

As the metal insert is fully solid, its shrinkage during the P/M-HIP process is much smaller, typically null or almost null, than that of a corresponding mass of metal powder, and this leads to smaller overall deformations and changes in the shape and size of the manufactured part, in particular of its surfaces. According to the present invention, such insert is left in the part after the end of its manufacturing.

If the part to be manufactured has one or more internal channels, one or more metal cores may be located inside the container before filling the container with metal powder, and the one or more cores are removed from the part before the end of its manufacturing. In this case, also the shape, size and position of the one ore more internal channels, in particular their surfaces, experience small deformations and changes (smaller than those obtained according to the prior art methods).

First exemplary embodiments relate to methods of manufacturing a component of a turbomachine by powder metal hot isostatic pressing, using a container defining outside surfaces of the component; at least one metal insert is located inside the container before filling the container with metal powder; the insert is left in the component after the end of its manufacturing. According to such embodiments, at least one metal core may be located inside the container before filling the container with metal powder; this core is removed from the component before the end of its manufacturing.

### BRIEF DESCRIPTION OF DRAWINGS

The present invention will become more apparent from the following description of exemplary embodiments to be considered in conjunction with accompanying drawings wherein:
Figure 1 shows a simplified cross-sectional view of a first arrangement (according to the prior art) for manufacturing a first mechanical part by powder metal hot isostatic pressing, and a corresponding turbomachine component;
Figure 2 shows a simplified cross-sectional view of a second arrangement (according to the present invention) for manufacturing the first mechanical part by powder metal hot isostatic pressing, and a corresponding turbomachine component;
Figure 3 shows a simplified cross-sectional view of a third arrangement (according to the prior art) for manufacturing a second mechanical part by powder metal hot isostatic pressing, and a corresponding turbomachine component;
Figure 4 shows a simplified cross-sectional view of a fourth arrangement (according to the present invention) for manufacturing the second mechanical part by powder metal hot isostatic pressing, and a corresponding turbomachine component;
Figure 5 shows a cross-sectional partial view of a fifth arrangement (according to the present invention) for manufacturing the second mechanical part by powder metal hot isostatic pressing;
Figure 6 shows a cross-sectional partial view of a sixth arrangement (according to the present invention) for manufacturing the second mechanical part by powder metal hot isostatic pressing;
Figure 7 shows a cross-sectional partial view of a seventh arrangement (according to the present invention) for manufacturing the second mechanical part by powder metal hot isostatic pressing; and
Figure 8 shows a cross-sectional partial view of a eighth arrangement (according to the present invention) for manufacturing the second mechanical part by powder metal hot isostatic pressing.

### DETAILED DESCRIPTION

The following description of exemplary embodiments refer to the accompanying drawings. The same reference numbers in different drawings identify the same or similar elements. The following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

In the following exemplary description, it must be assumed that all parts shown in the figures are manufactured by powder metal hot isostatic pressing, i.e. P/M-HIP, even if, sometimes, other technologies might be used.

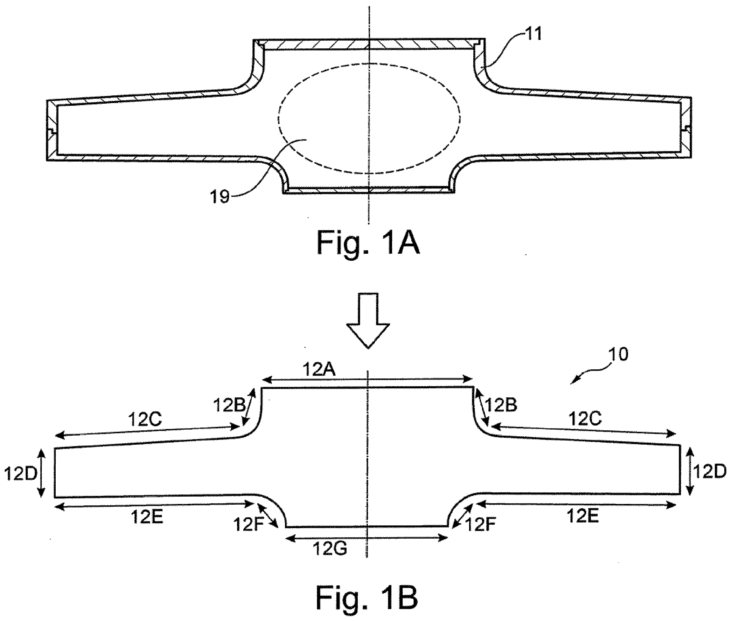

Fig.1B shows a simplified cross-sectional view of a first turbomachine component 10, in particular a rotor wheel of a turbine, that has an axial symmetry (corresponding to the rotation axis); this component is manufactured by P/M-HIP.

Fig.1A shows a container 11 used for manufacturing component 10 by P/M-HIP; according to this technology, the container 11 is filled with metal powder. The container 11 defines the outside surfaces of the component 10; in particular, there are a top surface 12A (substantially circular), an upper vertical surface 12B, an upper horizontal surface 12C, an intermediate vertical surface 12D, a lower horizontal surface 12E, a lower vertical surface 12F, a bottom surface 12G (substantially circular).

In the example of Fig.1, high deformations may be caused for example by region 19 of the container 11 where there is a lot of metal powder (that is subject to high total shrinkage) when the container 11 is filled with powder; in this example, the region 19 has the shape of an ellipsoid. This means that without adequate simulations and without real manufacturing trials, all the surfaces 12A, 12B, 12C, 12D, 12E, 12F, 12G of the component 10 will have shapes, positions and sizes different from the desired ones.

It is to be noted that the shapes, positions and sizes of the walls of the container change during the P/M-HIP process; anyway, in Fig.1, for the sake of drafting simplicity, the shapes, positions and sizes of the internal surfaces of the container 11 before the start of the process correspond to the shapes, positions and sizes of the external surfaces of the component 10 after the end of the process.

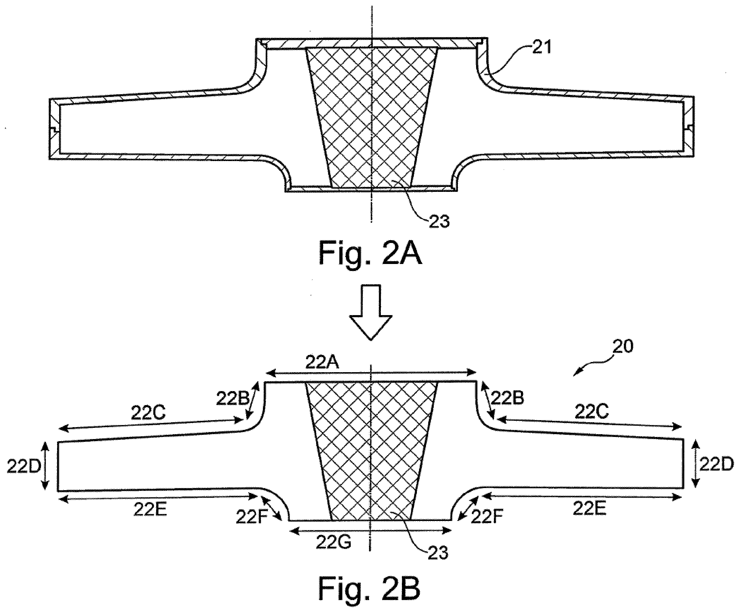

According to the teaching of the present invention - see Fig.2, a metal insert 23 is used for manufacturing a component 20 corresponding to the component 10 of Fig.1; it is to be noted that the component 10 and the component 20 have identical or very similar outside surfaces but they have different structure, i.e. are different inside.

Container 21 is similar to container 11.

The insert 23 is located inside the container 21 before filling the container 21 with metal powder (see Fig.2A) and is left in the component 20 after the end of its manufacturing (see Fig.2B).

The insert 23 has a shaped that is similar to that of the bulk portion of the component. In this way, it's possible to reduce the space between the container and the insert during the hot isostatic pressing and consequently the thickness of the component in the area next to the insert. Since the thickness of metal in this region of the component is reduced, when the component cools the risk of shrink is reduced.

The insert 23 of the embodiment of Fig.2 has the shape of a truncated cone and is coaxial with the container 21; it occupies most of the region 19 shown in Fig.1A (which is important), but it extends even beyond the region 19 shown in Fig.1A. Other shapes may be possible, for a cone shape, a prism shape, a truncated pyramid shape, a sphere shape, an ellipsoid shape, ....

It is to be noted that the container 11 in Fig.1A and the container 21 in Fig.2A are drawn identical; for the sake of drafting simplicity; anyway, due to the presence of the insert, the two containers may be quite different because their overall deformations during the P/M-HIP process are different even if the component 10 and the component 20 have identical or very similar outside surfaces; in particular, the overall deformation of the container 11 is higher than the overall deformation of the container 21 as the material in the region 19 of the container 11 shrink much more than the corresponding region of the container 21 where there is the insert 23 (whose deformation is typically null or almost null).

In the embodiment of Fig.2, the insert 23 has two surfaces adjacent to the container 21. Therefore, these two surfaces correspond to outside surfaces of the component 20 (see Fig.2B); specifically, these two surfaces are portions of surfaces 22A and 22G.

Thanks to the insert 23, it will be easier to manufacture component 20 by P/M-HIP, without real manufacturing trials, with very accurate surfaces, in particular surfaces 22B and 22F that are close to the insert 23, as well as surfaces 22A and 22G.

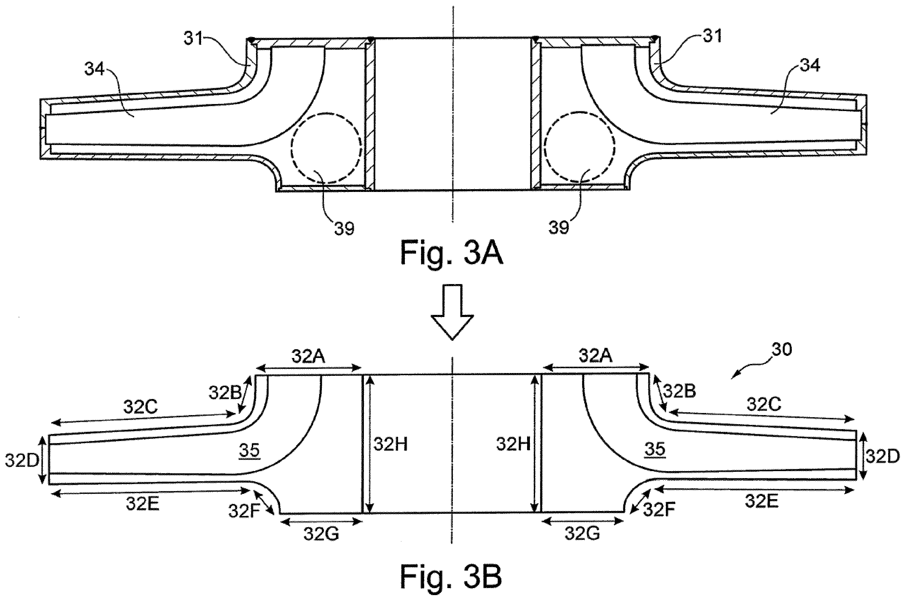

Fig.3B shows a simplified cross-sectional view of a second turbomachine component 30, in particular a closed centrifugal impeller of a centrifugal compressor, that has an axial symmetry (corresponding to the rotation axis)(to be precise it is an antisymmetry) and an axial through hole; this component is manufactured by powder metal hot isostatic pressing, i.e. P/M-HIP.

Fig.3A shows a container 31 used for manufacturing component 30 by P/M-HIP; according to this technology, the container 31 is filled with metal powder. The container 31 defines the outside surfaces of the component 30; in particular, there are a top surface 32A (substantially ring-shaped), an upper vertical surface 32B, an upper horizontal surface 32C, an intermediate vertical surface 32D, a lower horizontal surface 32E, a lower vertical surface 32F, a bottom surface 32G (substantially ring shaped) and an internal vertical surface 32H (that has for example a cylindrical shape and defines the through hole of the component); in this example, the container 31 has a circular through hole, but alternatively it may comprise a fully solid and rigid cylindrical part.

Furthermore, the component 30 has a plurality of internal flow paths 35; in order to define the surfaces of the plurality of through holes 35 a corresponding plurality of metal cores 34 are located inside the container 31; alternatively, the cores 34 may correspond to the arms of a single body. The metal cores are located inside the container 31 before filling the container 31 with metal powder (see Fig.3A), and are removed from the component 30 before the end of its manufacturing (see Fig.3B).

In the example of Fig.3, high deformations may be caused for example by region 39 of the container 31 where there is a lot of metal powder (that is subject to high total shrinkage) when the container 31 is filled with powder; in this example, the region 39 has the shape of a ring. This means that without adequate simulations and without real manufacturing trials, all the outside surfaces 32A, 32B, 32C, 32D, 32E, 32F, 32G and 32H of the component 30 and all the inside surfaces of the component 30 (i.e. the surfaces defining the internal paths 35) will have shapes, positions and sizes different from the desired ones; this is particularly disadvantageous for the inside surfaces as accurately machining these surfaces is difficult or, sometimes, even impossible.

It is to be noted that the shapes, positions and sizes of the walls of the container change during the P/M-HIP process; anyway, in Fig.3, for the sake of drafting simplicity, the shapes, positions and sizes of the internal surfaces of the container 31 before the start of the process correspond to the shapes, positions and sizes of the external surfaces of the component 30 after the end of the process.

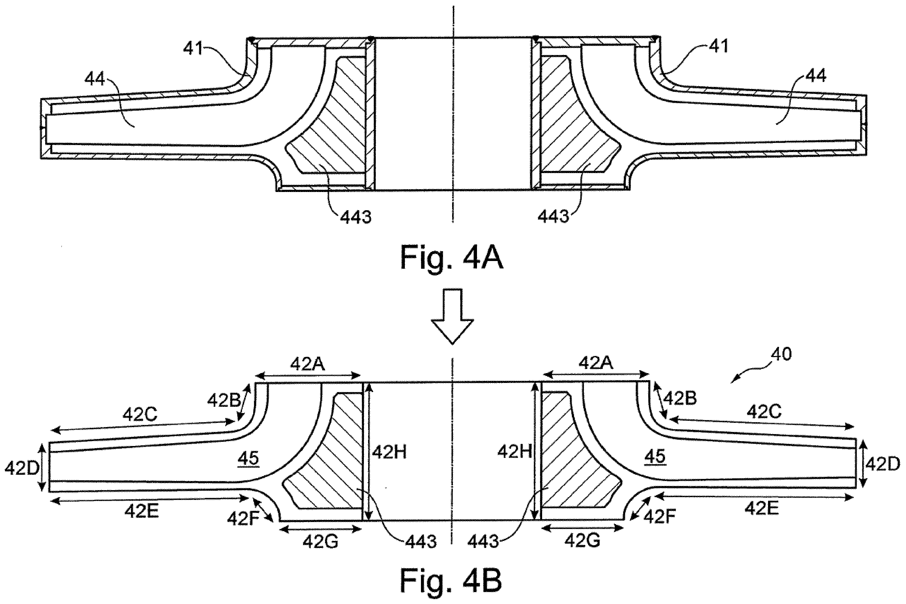

According to the teaching of the present invention - see Fig.4, a metal insert 443 is used for manufacturing a component 40 corresponding to the component 30 of Fig.3; it is to be noted that the component 30 and the component 40 have identical or very similar outside surfaces but they have different structure.

Container 41 is similar to container 31.

The insert 443 is located inside the container 41 before filling the container 41 with metal powder (see Fig.4A) and is left in the component 20 after the end of its manufacturing (see Fig.4B).

The cores 44 are located inside the container 41 before filling the container 41 with metal powder (see Fig.4A) and are removed from the component 40 before the end of its manufacturing (see Fig.4B).

The insert 443 of the embodiment of Fig.4 has the shape of a ring and is coaxial with the container 41; it occupies most of the region 39 shown in Fig.3A (which is important), but it extends even beyond the region 39 shown in Fig.3A. The shape of the cross-section of this ring is such as to occupy most of the space between the flow path cavities and the rotation axis of the component.

It is to be noted that the container 31 in Fig.3A and the container 41 in Fig.4A are drawn identical; for the sake of drafting simplicity; anyway, due to the presence of the insert, the two containers may be quite different because their deformations during the P/M-HIP process are different even if the component 30 and the component 40 have identical or very similar outside surfaces; in particular, the overall deformation of the container 31 is higher than the overall deformation of the container 41 as the material in the region 39 of the container 31 shrink much more than the corresponding region of the container 41 where there is the insert 443 (whose deformation is typically null or almost null).

In the embodiment of Fig.4, only one insert is provided and is a bulk insert in a single piece.

In the embodiment of Fig.4, the insert 443 has one surface adjacent to the container 41. Therefore, this surface corresponds to an outside surface of the component 40 (see Fig.4B); specifically, this surface is a portion of surface 42H.

In the embodiment of Fig.4, the insert 443 has no surface adjacent to the core 44 (see Fig.4A); a surface of the insert 443 is close to the core 44 and substantially parallel.

Thanks to the insert 443, it will be easier to manufacture component 40 by P/M-HIP, without real manufacturing trials, with very accurate surfaces, in particular outside surfaces and, even more important, inside surfaces, i.e. the surfaces defining the flow paths 45 (where the cores 44 are located before removal at the end of manufacturing).

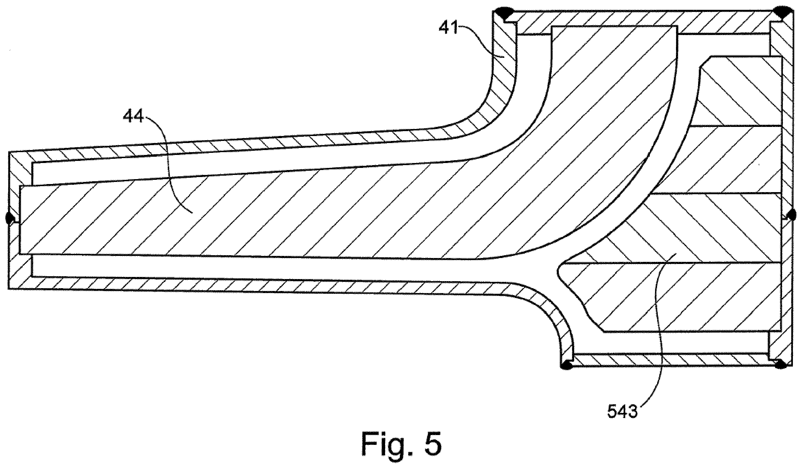

The embodiment of Fig.5 is very similar to the embodiment of Fig.4.

The difference consists in that the metal insert 543 is a bulk insert in a plurality of pieces; each of the pieces is ring-shaped; the pieces are separate and adjacent to each other (i.e. fully in contact) so to form a single body within the metal powder before filling the container; alternatively, for example, the pieces of the insert are separate and (a little) distant from each other so that some metal powder may fill the gap between them and facilitate bonding of these pieces; preferably, the distance is preferably in the range from 0.5 mm to 5.0 mm.

As Fig.5 is an enlarged view, it is possible to see more details of the container 41. For example the container 41 comprises recesses designed to lock the insert 543 and the core 44; specifically, there are a first recess in the top wall and a second recess in an intermediate vertical wall of the container for locking respectively a first and a second end of the core; specifically, there is a third recess in the internal vertical wall of the container for locking and keeping them together the various pieces of the insert.

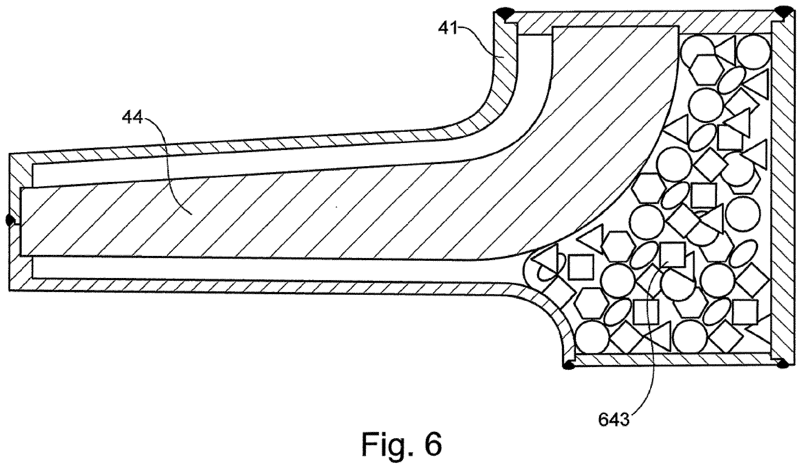

In the embodiment of Fig.6, the metal insert 643 is a bulk insert in a plurality of pieces; the plurality of pieces are separate from each other (even if partially in contact) so to form a plurality of bodies within the metal powder before filling the container. In Fig.6, the bodies have different shapes of geometric figures an similar size; anyway, there are many other possibilities including for example irregular figures and/or different sizes, such as for example gravel.

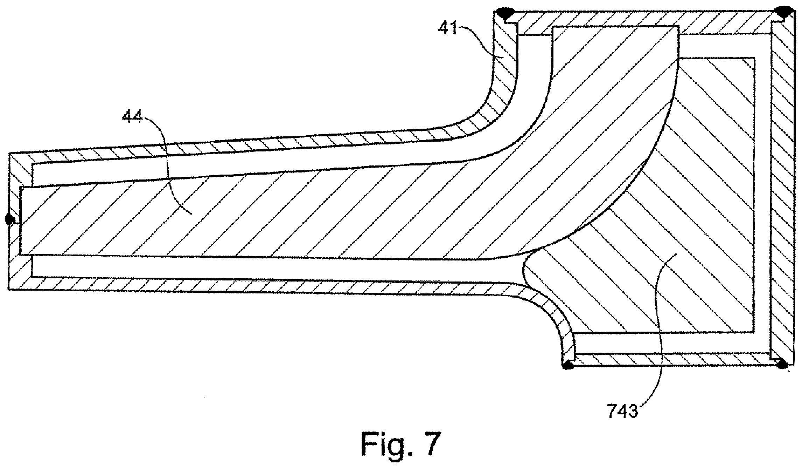

The embodiment of Fig.7 is similar to the embodiment of Fig.4.

The difference consists in that the metal insert 743 has a surface adjacent to the core 44.

As Fig.7 is an enlarged view, it is possible to see more details of the container 41. For example the container 41 comprises recesses designed to lock the core 44; specifically, there are a first recess in the top wall and a second recess in an intermediate vertical wall of the container for locking respectively a first and a second end of the core.

The insert 743 is reasonably locked inside container 41 as it is ring-shaped and it is adjacent to both the cores 44 and a wall of the container 41 (see Fig.7 below) so that it can not move.

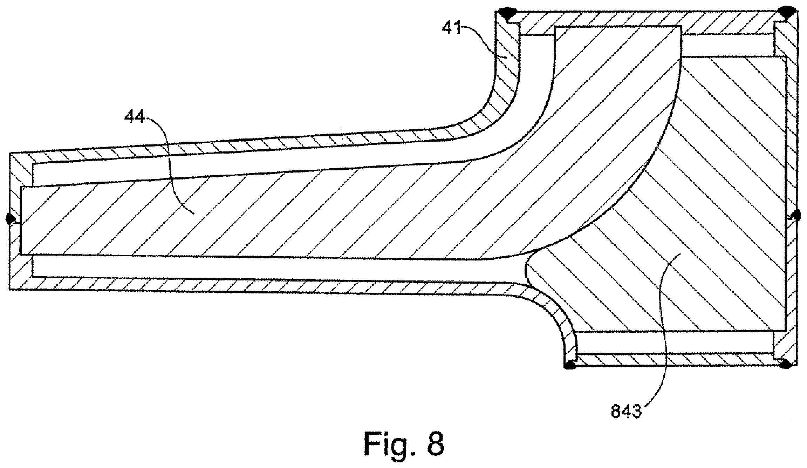

The embodiment of Fig.8 is very similar to the embodiment of Fig.7.

The difference consists in that the metal insert 843 has also another surface adjacent to the container.

Specifically, there is a recess in the internal vertical wall of the container for locking, even better, the insert 843.

Preferably, the metal material of the insert and the metal material of the powder for the P/M-HIP are the same; in this way, the two parts of the component match and join very well; furthermore, in this way, it is easier to define heat treatments for the component as the same heat treatment would work equally well for both the solid insert and the hot-pressed powder.

In principle, different materials may also be used for the insert and the powder.

One or more of the surfaces of the insert may have protrusions (e.g. ribs) and/or may be corrugated or textured or rough; if this regards a surface at the interface between the powder and the insert, a better connection between the pressed powder and the insert may be achieved and a more reliable and more strong joint may be obtained.

The insert is preferably fully solid and preferably rigid. It is manufactured before the component, even a long time before. It may be manufactured in different ways: by powder metal hot isostatic pressing, by additive manufacturing, by forging, by casting (for example investment casting), ....

The container may be removed from the component before the end of its manufacturing, as it is common according to the P/M-HIP technology, and as it is shown in Fig.1, Fig.2, Fig.3, Fig.4. Usually, the container is removed by machining (for example turning or milling) and/or by pickling.

Alternatively, the container may be left, at least partially, in the component after the end of its manufacturing.

Usually, the container is made of carbon steel; if it has to be removed, it may be useful to use low carbon steel in order to facilitate removal.

As already said, the core or cores, if any, are removed from the component before the end of its manufacturing. Usually, the core or cores are removed by machining (for example drilling or milling) and/or by pickling. Usually, the core or cores are made of carbon steel, preferably low carbon steel in order to facilitate removal.

In some of the embodiments shown in the annexed figures, the metal insert is locked to the container by means of recesses in an inside wall of the container. Anyway, according to alternative embodiments, the insert is locked to the container by means of pins.

In all the embodiments shown in the annexed figures, the metal insert has the shape of a ring. Anyway, according to alternative embodiments, the insert consists of a plurality (for example two of e.g. 180° or three of e.g. 120° or four of e.g. 90°) sectors adjacent to each other or separate and (a little) distant from each other; furthermore, the sectors may be fixed to each other.

In all the embodiments shown in the annexed figures, the metal insert is fully inside the container. Anyway, according to alternative embodiments, the insert reach one or more the outside surfaces of the container (and act partially also as a wall of the container).

## Claims

1. A method of manufacturing a component (20; 40) of a turbomachine by powder metal hot isostatic pressing, using a container (21; 41) defining outside surfaces (22A, 22B, 22C, 22D, 22E, 22F, 22G; 42A, 42B, 42C, 42D, 42E, 42F, 42G, 42H) of the component (20; 40);
wherein a metal insert (23; 443; 543; 643; 743; 843) and a metal core (44) are located inside the container (21; 41) before filling the container (21; 41) with metal powder, the metal material of the insert and the metal material of the powder being the same; and
wherein the insert (23; 443; 543; 643; 743; 843) is left in the component (20;40) after the end of its manufacturing, and the core (44) is removed from the component (20; 40) before the end of its manufacturing by pickling and/or by machining.

2. The method of claim 1, wherein the container (21; 41) is removed from the component (20; 40) before the end of its manufacturing or is left, at least partially, in the component (20; 40) after the end of its manufacturing.

3. The method of claim 1 or claim 2, wherein the insert (23; 443; 543; 643; 743; 843) is a bulk insert in a single piece (23; 443; 743; 843) or in a plurality of pieces (543; 643).

4. The method of claim 3, wherein the plurality of pieces are separate, in contact and adjacent to each other so to form a single body (543) within the metal powder before filling the container (21; 41).

5. The method of claim 3, wherein the plurality of pieces are separate and in contact with each other so to form a plurality of bodies (643) within the metal powder before filling the container (21; 41).

6. The method of claim 3, wherein the pieces are distant from each other so that metal powder may interpose, the distance being preferably in the range from 0.5 mm to 5.0 mm.

7. The method of any of the preceding claims from 1 to 6, wherein the insert (23; 443; 543; 843) has at least one surface adjacent to the container (21; 41).

8. The method of any of the preceding claims from 1 to 6, wherein the insert (743; 843) has at least one surface adjacent to the core (44).

9. The method of any of the preceding claims from 1 to 6, wherein the insert (843) has at least one surface adjacent to the container (41) and at least one surface adjacent to the core (44).

10. The method of any of the preceding claims from 1 to 9, wherein the insert (23; 443; 543; 643; 743; 843) is manufactured by powder metal hot isostatic pressing, additive manufacturing, forging or casting.

## Patentansprüche

1. Verfahren zum Herstellen einer Komponente (20; 40) einer Turbomaschine durch heißisostatisches Pressen eines Pulvermetalls unter Verwendung eines Behälters (21; 41), der die Außenoberflächen (22A, 22B, 22C, 22D, 22E, 22F, 22G; 42A, 42B, 42C, 42D, 42E, 42F, 42G, 42H) der Komponente (20; 40) definiert;
wobei sich ein Metalleinsatz (23; 443; 543; 643; 743; 843) und ein Metallkern (44) innerhalb des Behälters (21; 41) befinden, bevor der Behälter (21; 41) mit Metallpulver gefüllt wird, wobei das Metallmaterial des Einsatzes und das Metallmaterial des Pulvers gleich sind; und
wobei der Einsatz (23; 443; 543; 643; 743; 843) nach dem Ende seiner Herstellung in der Komponente (20;40) belassen wird und der Kern (44) vor dem Ende seiner Herstellung durch Beizen und/oder durch Bearbeiten von der Komponente (20; 40) entfernt wird.

2. Verfahren nach Anspruch 1, wobei der Behälter (21; 41) vor dem Ende seiner Herstellung von der Komponente (20; 40) entfernt wird oder, mindestens teilweise, nach dem Ende seiner Herstellung in der Komponente (20; 40) belassen wird.

3. Verfahren nach Anspruch 1 oder 2, wobei der Einsatz (23; 443; 543; 643; 743; 843) ein Masseneinsatz in einem einzigen Stück (23; 443; 743; 843) oder in einer Vielzahl von Stücken (543; 643) ist.

4. Verfahren nach Anspruch 3, wobei die Vielzahl von Stücken getrennt, in Kontakt und angrenzend zueinander sind, um einen einzelnen Körper (543) innerhalb des Metallpulvers zu bilden, bevor der Behälter (21; 41) gefüllt wird.

5. Verfahren nach Anspruch 3, wobei die Vielzahl von Stücken getrennt und miteinander in Kontakt sind, um eine Vielzahl von Körpern (643) innerhalb des Metallpulvers zu bilden, bevor der Behälter (21; 41) gefüllt wird.

6. Verfahren nach Anspruch 3, wobei die Stücke voneinander entfernt sind, so dass das Metallpulver dazwischen liegen kann, wobei die Entfernung vorzugsweise in dem Bereich von 0,5 mm bis 5,0 mm liegt.

7. Verfahren nach einem der vorstehenden Ansprüche von 1 bis 6, wobei der Einsatz (23; 443; 543; 843) mindestens eine Oberfläche aufweist, die an den Behälter (21; 41) angrenzt.

8. Verfahren nach einem der vorstehenden Ansprüche von 1 bis 6, wobei der Einsatz (743; 843) mindestens eine Oberfläche aufweist, die an den Kern (44) angrenzt.

9. Verfahren nach einem der vorstehenden Ansprüche von 1 bis 6, wobei der Einsatz (843) mindestens eine Oberfläche, die an den Behälter (41) angrenzt, und mindestens eine Oberfläche, die an den Kern (44) angrenzt, aufweist.

10. Verfahren nach einem der vorstehenden Ansprüche von 1 bis 9, wobei der Einsatz (23; 443; 543;643; 743; 843) durch heißisostatisches Pressen eines Pulvermetalls, additive Herstellung, Schmieden oder Gießen hergestellt wird.

## Revendications

1. Procédé de fabrication d'un composant (20 ; 40) d'une turbomachine par compression isostatique à chaud de métal en poudre, à l'aide d'un récipient (21 ; 41) définissant des surfaces extérieures (22A, 22B, 22C, 22D, 22E, 22F, 22G ; 42A, 42B, 42C, 42D, 42E, 42F, 42G, 42H) du composant (20 ; 40) ;
dans lequel un insert métallique (23 ; 443 ; 543 ; 643 ; 743 ; 843) et un noyau métallique (44) sont situés à l'intérieur du récipient (21 ; 41) avant de remplir le récipient (21 ; 41) de poudre métallique, le matériau métallique de l'insert et le matériau métallique de la poudre étant identiques ; et
dans lequel l'insert (23 ; 443 ; 543 ; 643 ; 743 ; 843) est laissé dans le composant (20 ; 40) après la fin de sa fabrication, et le noyau (44) est retiré du composant (20 ; 40) avant la fin de sa fabrication par décapage et/ou par usinage.

2. Procédé selon la revendication 1, dans lequel le récipient (21 ; 41) est retiré du composant (20 ; 40) avant la fin de sa fabrication ou est laissé, au moins partiellement, dans le composant (20 ; 40) après la fin de sa fabrication.

3. Procédé selon la revendication 1 ou la revendication 2, dans lequel l'insert (23 ; 443 ; 543 ; 643 ; 743 ; 843) est un insert en bloc en une seule pièce (23 ; 443 ; 743 ; 843) ou en une pluralité de pièces (543 ; 643).

4. Procédé selon la revendication 3, dans lequel la pluralité de pièces sont distinctes, en contact et adjacentes les unes aux autres de manière à former un seul corps (543) à l'intérieur de la poudre métallique avant de remplir le récipient (21 ; 41).

5. Procédé selon la revendication 3, dans lequel la pluralité de pièces sont distinctes et en contact les unes avec les autres, de manière à former une pluralité de corps (643) à l'intérieur de la poudre métallique avant de remplir le récipient (21 ; 41).

6. Procédé selon la revendication 3, dans lequel les pièces sont distantes les unes des autres de manière à ce que la poudre métallique peut s'intercaler, la distance étant de préférence dans la plage allant de 0,5 mm à 5,0 mm.

7. Procédé selon l'une quelconque des revendications précédentes de 1 à 6, dans lequel l'insert (23 ; 443 ; 543 ; 843) a au moins une surface adjacente au récipient (21 ; 41).

8. Procédé selon l'une quelconque des revendications précédentes de 1 à 6, dans lequel l'insert (743 ; 843) a au moins une surface adjacente au noyau (44).

9. Procédé selon l'une quelconque des revendications précédentes de 1 à 6, dans lequel l'insert (843) a au moins une surface adjacente au récipient (41) et au moins une surface adjacente au noyau (44).

10. Procédé selon l'une quelconque des revendications précédentes de 1 à 9, dans lequel l'insert (23 ; 443 ; 543 ; 643 ; 743 ; 843) est fabriqué par compression isostatique à chaud de métal en poudre, fabrication additive, forgeage ou moulage.
